# EUROPÄISCHE PATENTSCHRIFT

(11) **EP 3 571 966 B1**
(45) Veröffentlichungstag und Bekanntmachung des Hinweises auf die Patenterteilung: **04.11.2020**
(21) Anmeldenummer: 18214957.5
(22) Anmeldetag: 14.05.2018
(51) Int. Cl.: A47J 43/046, A47J 43/07, A47J 43/08

(54) **SPEISENZUBEREITUNGSVORRICHTUNG MIT LÖSBAREM WERKZEUG**
FOOD PREPARATION DEVICE WITH RELEASABLE TOOL
DISPOSITIF DE PRÉPARATION D'ALIMENTS À OUTIL AMOVIBLE

(43) Veröffentlichungstag der Anmeldung: 27.11.2019
(62) Teilanmeldung aus: 18171974.1
(73) Patentinhaber: Vorwerk & Co. Interholding GmbH, 42270 Wuppertal (DE)
(72) Erfinder: Charopoulos, Philipp, 40223 Düsseldorf (DE)
(74) Vertreter: Gille Hrabal

(56) Entgegenhaltungen:
- EP-A1- 0 157 128
- CN-A- 107 713 823
- DE-A1-102009 014 990
- US-A- 3 355 152
- US-A1- 2016 198 902
- US-B1- 6 715 706

## Beschreibung

Die Erfindung betrifft eine Verankerungsbaugruppe für eine Speisenzubereitungsvorrichtung.

Bei Speisenzubereitungsvorrichtungen wie Küchenmaschinen ist häufig eine Mixmesser-Einheit als Werkzeug in einer Durchführung im Topfboden integriert. Beim Entnehmen einer Speise stört dann jedoch das Mixmesser, und der Benutzer kann sich zudem an dem Mixmesser verletzen. Einige Speisenzubereitungsvorrichtungen erlauben ein Entfernen der Mixmesser-Einheit aus der Durchführung, wodurch der Topf jedoch undicht wird. Speisenzubereitungsvorrichtungen und Verankerungsbaugruppen zum Verankern in einem Speisenzubereitungsgefäß einer Speisenzubereitungsvorrichtung sind aus den Druckschriften US3355152A, EP0157128A1, CN107713823A, DE102009014990A1, US6715706B1 und US2016/198902A1 bekannt.

Es ist Aufgabe der Erfindung, eine weiterentwickelte Verankerungsbaugruppe für eine Speisenzubereitungsvorrichtung bereitzustellen.

Zur Lösung der Aufgabe dienen eine Verankerungsbaugruppe für eine Speisenzubereitungsvorrichtung gemäß dem Hauptanspruch.

Eine Speisenzubereitungsvorrichtung weist ein drehbares Werkzeug zum Zerkleinern und/oder Mischen einer Speise in einem Speisenzubereitungsgefäß auf. Das Werkzeug kann lösbar mit einer Welle verbunden werden. Die Welle erstreckt sich von außerhalb des Speisenzubereitungsgefäßes durch eine Durchführung hindurch in Richtung des Werkzeugs innerhalb des Speisenzubereitungsgefäßes, um das Werkzeug antreiben zu können. Wird das Werkzeug durch die Welle angetrieben, so dreht sich das Werkzeug. Ein Verriegelungsmechanismus für ein verriegeltes Verbinden des Werkzeugs mit der Welle ist vorgesehen. Der Verriegelungsmechanismus ist so eingerichtet, dass ein Lösen und/oder ein Verriegeln der Verbindung des Werkzeugs mit der Welle von außerhalb des Speisenzubereitungsgefäßes erfolgen kann.

Ein Benutzer kann dadurch nach der Zubereitung einer Speise das Werkzeug von außen lösen, ohne dazu in direkten Kontakt mit der zubereiteten Speise zu geraten. Das gelöste Werkzeug kann anschließend z.B. mit einer Gabel oder ähnlichem aus dem Speisenzubereitungsgefäß herausgehoben werden. Die zubereitete Speise kann dann ohne Behinderung durch das Werkzeug aus dem Speisenzubereitungsgefäß entnommen werden. Hierdurch wird außerdem der Vorteil erzielt, den Innenraum des Topfes sowie das Werkzeug besonders unproblematisch kurzfristig manuell für einen nächsten Gebrauch gründlich reinigen zu können, ohne dafür das Gefäß nebst Werkzeug in eine Vielzahl von Teilen zerlegen zu müssen.

Eine Verankerungsbaugruppe für die oben beschriebene Speisenzubereitungsvorrichtung ist erfindungsgemäß zum Verankern in einem Speisenzubereitungsgefäß der Speisenzubereitungsvorrichtung vorgesehen und zwar derart, dass sich eine Welle der Verankerungsbaugruppe von außerhalb des Speisenzubereitungsgefäßes durch eine Durchführung erstrecken kann, die ins Innere des Speisenzubereitungsgefäßes führt. Durch die Welle kann dann ein Werkzeug innerhalb des Speisenzubereitungsgefäßes für ein Mischen und/oder Zerkleinern einer Speise angetrieben, also gedreht werden. Die Verankerungsbaugruppe umfasst ein Verankerungselement und eine Verankerungseinrichtung für das Verankern des Verankerungselements mit einem Speisenzubereitungsgefäß. Die Verankerungseinrichtung ist in Richtung einer Drehachse der Welle zwischen einem Betätigungselement und einem Sperrelement angeordnet, wobei das Betätigungselement und das Sperrelement so miteinander gekoppelt sind, dass sich das Betätigungselement und das Sperrelement gemeinsam relativ zum Verankerungselement bewegen können. Eine zubereitete Speise kann dadurch ohne Behinderung durch ein Werkzeug zum Mischen und/oder Zerkleinern aus einem Speisenzubereitungsgefäß entnommen werden. Eine Verankerungsbaugruppe für eine Speisenzubereitungsvorrichtung kann eine Durchführung in einem Gefäßboden des Speisenzubereitungsgefäßes im verankerten Zustand abdichten und mittels der Welle das Werkzeug zum Zerkleinerung und/oder Mischen antreiben. Insbesondere bewirkt ein Verankern eine dichte, drehfeste und/oder axiale Fixierung. Die Welle kann wiederum an dem anderen Ende durch einen Antrieb angetrieben werden. Die nachfolgende Beschreibung bezieht sich auf die oben beschriebene Speisenzubereitungsvorrichtung und die Verankerungsbaugruppe für die Speisenzubereitungsvorrichtung gleichermaßen.

Das Werkzeug hat eine Drehachse. Das Werkzeug ist im betriebsbereiten Zustand drehfest, insbesondere mittels Formschluss, mit der Welle verbunden. Die Verriegelung ist vorzugsweise eine axiale Verriegelung. Eine axiale Verriegelung zwischen Werkzeug und Welle vermag so zu verriegeln, dass ein Lösen des Werkzeugs von der Welle infolge einer axialen Relativbewegung voneinander weg verhindert wird. Das Werkzeug kann mehrteilig sein. Das Werkzeug kann beispielsweise mindestens ein Mischwerkzeug umfassen, das fest an einer Ankopplungswelle angebracht ist. Die Ankopplungswelle wiederum kann drehfest, insbesondere mittels Formschluss, mit der Welle verbunden werden. Vorzugsweise ist das Mischwerkzeug eine radial abstehende Klinge zum Zerkleinern und Mischen. Bevorzugt weist das Werkzeug mindestens zwei oder vier um die Drehachse versetzt angeordnete Mischwerkzeuge auf. Zum Zerkleinern und/oder Mischen einer Speise befindet sich das Werkzeug innerhalb des Speisenzubereitungsgefäßes und kann dort angetrieben durch die Welle gedreht werden. Insbesondere ist das Werkzeug Bestandteil einer Werkzeugbaugruppe.

Eine Welle ist ein zylindrischer Drehkörper. Die Welle und das Werkzeug haben bevorzugt dieselbe Drehachse. Eine Welle kann einen oder mehrere Wellenabsätze zum Beispiel für einen Kugellagersitz oder als Abschirmung aufweisen. Eine Welle, die sich von außerhalb des Speisenzubereitungsgefäßes durch eine Durchführung hindurch in Richtung des Werkzeugs innerhalb des Speisenzubereitungsgefäßes erstreckt, kann ein Antriebsmoment von einem Antriebsmotor außerhalb des Speisenzubereitungsgefäßes auf das Werkzeug innerhalb des Speisenzubereitungsgefäßes übertragen. Die Durchführung führt von außerhalb ins Innere des Speisenzubereitungsgefäßes. Insbesondere wird die Durchführung durch eine geschlossen umlaufende Wandung im Gefäßboden gebildet. Die Durchführung verläuft bevorzugt axial und/oder koaxial zur Drehachse. Insbesondere ist ein Dichtelement im Bereich der Gefäßdurchführung vorgesehen, damit im betriebsbereiten Zustand oder zumindest bei verankerter Verankerungsbaugruppe nach unten keine Flüssigkeit aus dem Inneren des Speisenzubereitungsgefäßes nach außen gelangen kann. In einer Ausgestaltung umfasst das Speisenzubereitungsgefäß und/oder das Werkzeug Metall. Vorzugsweise umfasst das Mischwerkzeug Metall oder besteht vollständig aus Metall.

Allgemein gehört zum Inneren des Speisenzubereitungsgefäßes der gesamte, zusammenhängende Raum, der im betriebsbereiten Zustand beispielsweise mit einer Flüssigkeit ausgefüllt wird, wenn das betriebsbereite Speisenzubereitungsgefäß mit einer Flüssigkeit gefüllt wird. Mit "innerhalb eines Speisenzubereitungsgefäßes" ist dieser Raum gemeint. Die untere Begrenzung dieses Raums, die grundsätzlich im betriebsbereiten Zustand teilweise durch die Verankerungsbaugruppe gebildet wird, muss nicht eben sein und kann beispielsweise eine becherförmige Vertiefung umfassen oder stufenförmig verlaufen. Abweichungen von einem ebenen Verlauf werden vorliegend jedoch nicht bevorzugt, wenn diese wie im Fall einer becherförmigen Vertiefung ein Entnehmen einer Speise und ein Reinigen unnötig erschweren würden.

Wenn das Werkzeug drehfest mit der Welle z.B. durch ein Aufsetzen des Werkzeugs auf die Welle und ein drehfestes Ineinandergreifen korrespondierender, nicht-rotationssymmetrische Anschlusskonturen verbunden ist, so ist diese Verbindung noch nicht verriegelt. Es gibt also einen über dieses drehfeste Verbinden hinausgehenden beweglichen Mechanismus, durch den verriegelt werden kann. Der bewegliche Mechanismus kann durch Bewegen von einem Bauteil des beweglichen Mechanismus in eine entriegelte Stellung sowie in eine verriegelte Stellung gebracht werden. In der verriegelten Stellung kann das Werkzeug nicht von der Welle gelöst und getrennt werden. In der entriegelten Stellung kann das Werkzeug von der Welle gelöst und getrennt werden und zwar bevorzugt in axialer Richtung. Der bewegliche Mechanismus wird daher Verriegelungsmechanismus genannt.

Das Werkzeug ist vorzugsweise ein Teil einer Baugruppe, die Werkzeugbaugruppe genannt wird. Vorteilhaft ist die Welle Teil einer Baugruppe, die Verankerungsbaugruppe genannt wird. Die Handhabung kann dadurch erleichtert werden. Mit Baugruppe ist eine aus mehreren Einzelteilen bestehende Einheit gemeint. Durch das Zusammenfassen einer Mehrzahl von Bauteilen zu einer zusammenhängenden Baugruppe kann die Handhabung erleichtert werden. Die Teile der Baugruppe können formschlüssig, kraftschlüssig und/oder stoffschlüssig miteinander verbunden sein. Beide Baugruppen, also die Werkzeugbaugruppe und die Verankerungsbaugruppe, umfassen insbesondere Teile, die das drehfeste Verbinden von Welle und Werkzeug ermöglichen. Beide Baugruppen umfassen insbesondere Teile, die das Verriegeln von Welle und Werkzeug ermöglichen.

Bevorzugt umfasst die Werkzeugbaugruppe ein Drehlager für das Werkzeug. Dieses Drehlager ermöglicht ein Drehen des Werkzeugs relativ zu ein oder mehreren weiteren Teilen der Werkzeugbaugruppe, insbesondere zu einem Werkzeuganschlusselement. Durch das Drehlager für das Werkzeug wird das Werkzeug relativ zu den ein oder mehreren weiteren Bauteilen vorzugsweise in axialer Richtung fixiert. Eine Relativbewegung von Werkzeug und den ein oder mehreren weiteren Bauteilen der Werkzeugbaugruppe in axialer Richtung ist also dann nicht möglich.

Bevorzugt umfasst die Verankerungsbaugruppe ein Drehlager für die Welle. Das Drehlager für die Welle ermöglicht ein Drehen der Welle relativ zu ein oder mehreren weiteren Teilen der Verankerungsbaugruppe.

Durch das Drehlager für für die Welle wird die Welle relativ zu den ein oder mehreren weiteren Bauteilen vorzugsweise in axialer Richtung fixiert. Eine Relativbewegung von Welle und den ein oder mehreren weiteren Bauteilen der Verankerungsbaugruppe in axialer Richtung ist also dann nicht möglich.

Bevorzugt ist das Drehlager für das Werkzeug ein Kugellager. Bevorzugt ist das Drehlager für die Welle ein Kugellager. In einer Ausgestaltung umfasst die Werkzeugbaugruppe eine weitere Welle, die Ankopplungswelle genannt wird. Das Werkzeug ist mit der Ankopplungswelle vorzugsweise unlösbar axial und drehfest verbunden. Eine Relativbewegung zwischen dem Werkzeug und der Ankopplungswelle ist dann nicht möglich. Auch können Werkzeug und Ankopplungswelle nicht zerstörungsfrei voneinander getrennt werden.

Werden Werkzeugbaugruppe und Verankerungsbaugruppe miteinander drehfest verbunden und verriegelt, so sind die Welle der Verankerungsbaugruppe und die Ankopplungswelle drehfest miteinander verbunden und zwar vorzugsweise durch Formschluss, um die Welle der Verankerungsbaugruppe und die Ankopplungswelle besonders einfach wieder trennen zu können. Die Welle der Verankerungsbaugruppe und die Ankopplungswelle können gemeinsam relativ zu weiteren Teilen der beiden Baugruppen gedreht werden, insbesondere zu dem Verankerungselement und/oder dem Werkzeuganschlusselement.

In einer Ausführungsform umfasst der Verriegelungsmechanismus und zwar insbesondere die Verankerungsbaugruppe ein Sperrelement und ein Betätigungselement. Ausgehend von der nicht verriegelten Stellung können Werkzeug und Welle im verbunden Zustand durch das Sperrelement miteinander verriegelt werden. Ausgehend von der verriegelten Stellung können Werkzeug und Welle durch das Sperrelement entriegelt werden. Das Sperrelement und das Betätigungselement sind miteinander gekoppelt. Aufgrund der Kopplung kann das Sperrelement durch ein Betätigen des Betätigungselements in seine verriegelnde und in seine nicht verriegelnde Stellung bewegt werden. Die nicht verriegelnde Stellung wird auch entriegelte Stellung oder Freigabestellung genannt. Die verriegelte Stellung wird auch Sperrstellung genannt. Eine Bewegung wie eine Rotation und/oder Translation des Betätigungselementes bewirkt also eine insbesondere synchrone Bewegung des Sperrelementes und/oder umgekehrt. Das Betätigungselement zum Betätigen des Verriegelungsmechanismus ist außerhalb des Speisenzubereitungsgefäßes und/oder unterhalb einer Verankerungseinrichtung der Verankerungsbaugruppe angeordnet. Das Sperrelement für das verriegelte Verbinden des Werkzeugs mit der Welle ist innerhalb des Speisenzubereitungsgefäßes und/oder oberhalb einer Verankerungseinrichtung der Verankerungsbaugruppe angeordnet. Die Angaben "außerhalb" und "innerhalb" beziehen sich auf einen betriebsbereiten Zustand der Speisenzubereitungsvorrichtung. Ein Lösen und/oder Verriegeln der Verbindung des Werkzeugs mit der Welle von außerhalb des Speisenzubereitungsgefäßes können so besonders einfach und kompakt umgesetzt werden.

Das Betätigungselement und/oder das Sperrelement sind bevorzugt scheibenartig. Das Betätigungselement und/oder das Sperrelement weisen vorzugsweise mindestens einen Vorsprung auf. Sind das Betätigungselement und das Sperrelement drehbar um eine Achse gelagert, so erstreckt sich ein solcher Vorsprung insbesondere in radialer Richtung von der Achse aus gesehen. Alternativ oder ergänzend sind das Betätigungselement und/oder das Sperrelement hebelartig geformt.

In einer Ausführungsform erfolgt die Kopplung von dem Betätigungselement mit dem Sperrelement durch ein Verbindungsmittel, das sich innerhalb der Durchführung und/oder axial erstreckt. Mit axial ist in Richtung der Drehachse gemeint und die Drehachse bezieht sich stets auf die Drehachse des Werkzeugs, wenn nicht anders angegeben. Eine besonders kompakte Bauweise kann so erzielt werden. Eine Kopplung kann durch eine bewegungsfeste Verbindung des Verbindungsmittels mit dem Betätigungselement und dem Sperrelement realisiert sein. Das Sperrelement führt dann durch diese Kopplung die gleichen Bewegungen aus wie das Betätigungselement. Alternativ ist es grundsätzlich möglich, dass das Verbindungsmittel ein Mitnehmer ist, derart, dass nur bestimmte Bewegungen und/oder Bewegungen innerhalb eines bestimmten Bereiches von dem Betätigungselement über das Verbindungsmittel auf das Sperrelement übertragen werden. Allgemein kann durch eine Kopplung eine Drehbewegung, ein Drehmoment, eine lineare Verschiebung und/oder eine lineare Kraft oder Vorspannung übertragen werden.

In einer Ausgestaltung erstreckt sich das Verbindungsmittel in einer Ausnehmung des Verankerungselements. Diese Ausnehmung wird Verbindungsausnehmung genannt. Das Verankerungselement trennt dann in radialer Richtung das Verbindungsmittel von der Wandung der Durchführung. Bevorzugt erstreckt sich die Verbindungsausnehmung für das Verbindungsmittel nicht nur axial, sondern auch in Umfangrichtung, damit bei einer Rotation des Betätigungselements das Verbindungsmittel nicht die Rotation relativ zum Verankerungselement blockiert.

In einer Ausführungsform, im Längsschnitt entlang einer Drehachse betrachtet, bildet das Betätigungselement mit dem Verbindungsmittel eine L-Form. In einer Ausführungsform, im Längsschnitt entlang einer Drehachse betrachtet, bildet das Verbindungsmittel mit dem Sperrelement eine L-Form. Das Betätigungselement, das Verbindungsmittel und das Sperrelement bilden in dieser Reihenfolge bevorzugt gemeinsam eine U-Form, die vorzugsweise 90° zur Drehachse gekippt ist. In dieser Reihenfolge meint, dass die drei genannten Bauteile jeweils die hintereinander senkrecht verbundenen drei Schenkel der U-Form bilden. Die Drehachse ist die Drehachse des Werkzeugs. Durch eine L-Form kann bei einer Betätigung des Verriegelungsmechanismus, z.B. durch Rotation um die Drehachse, von einer Hebelwirkung profitiert werden und somit die erforderliche Betätigungskraft reduziert werden. Eine U-Form wiederum ermöglicht ein besonders robustes Koppeln, nicht nur für eine Drehbewegung, sondern auch für eine axiale Verschiebung und/oder ein axiales Vorspannen. Beispielsweise kann durch die U-Form das Sperrelement nach unten gegen eine Rastkontur gedrückt oder vorgespannt gehalten werden, indem in die gleiche Richtung eine Druckkraft oder Vorspannkraft auf das Betätigungselement ausgeübt wird. Anders ausgedrückt ermöglicht die U-Form auf sehr kompakte und robuste Weise ein Einleiten von einer Kraft oder Bewegung außerhalb des Speisenzubereitungsgefäßes, die dann innerhalb des Speisenzubereitungsgefäßes durch das Sperrelement das Verriegeln und/oder Lösen bewirken können.

Die L-Form und/oder die U-Form im Längsschnitt betrachtet können sich auf nur eine Seite von der Drehachse beziehen, so dass auch ein L-förmiger oder U-förmiger Hebel, der insbesondere um die Drehachse schwenkbar gelagert ist, grundsätzlich möglich ist. Aber auch ein scheibenartiger Körper mit daran senkrecht angrenzendem Hebel oder Zylinderkörper können eine L-Form im Längsschnitt betrachtet bilden. In einer Ausgestaltung sind das Betätigungselement und/oder das Sperrelement scheibenförmig. In einer Ausgestaltung ist das Verbindungsmittel ein bevorzugt geradliniger Steg. Vorzugsweise ist das Verbindungsmittel einstückig mit dem Betätigungselement und/oder dem Sperrelement verbunden. Insbesondere ist ein mit dem Sperrelement einstückig verbundener Steg als das Verbindungsmittel mit dem anderen Ende fest, also unbeweglich, und bevorzugt nicht zerstörungsfrei lösbar an dem Betätigungselement angebracht. In einer Ausgestaltung gibt es mindestens zwei Verbindungsmittel, bevorzugt drei Verbindungsmittel, die insbesondere gleich geformt um die Drehachse gleichmäßig verteilt angeordnet sind.

In einer Ausführungsform sind das Betätigungselement und das Sperrelement insbesondere gemeinsam relativ zu einem Verankerungselement bewegbar, bevorzugt axial verschiebbar und/oder rotierbar. Durch die relative Bewegbarkeit zum Verankerungselement wird ein axiales Vorspannen des Betätigungselements oder Sperrelements gegen das Verankerungselement, ein axialer Hubweg des Betätigungselements oder Sperrelement gegenüber dem Verankerungselement und/oder gleichzeitig eine zum Verankerungselement relative Rotationsbewegung ermöglicht. Beispielsweise kann dadurch ein bajonettartiger Verriegelungsmechanismus und/oder eine kraftschlüssige Sicherung des Sperrelements in einer Sperrstellung erhalten werden.

In einer Ausführungsform weist das Verankerungselement eine Verankerungseinrichtung zum drehfesten und/oder axial fixierten Verankern mit dem Speisenzubereitungsgefäßes auf. Das Verankerungselement kann somit dicht und/oder fest, also unbeweglich, mit dem Speisenzubereitungsgefäßes oder der Wandung der Durchführung im Gefäßboden des Speisenzubereitungsgefäßes verbunden werden. Ein robustes Lager für eine Relativbewegung des Betätigungselements oder Sperrelements gegenüber dem Verankerungselement und damit dem Speisenzubereitungsgefäß kann so erhalten werden.

In einer Ausführungsform umfasst die Verankerungseinrichtung eine erste nicht-rotationssymmetrische Außenkontur zur formschlüssig drehfesten Verbindung mit einer nicht-rotationssymmetrischen Innenkontur der Durchführung. Die beiden nicht-rotationssymmetrischen Konturen sind also so angepasst, dass bei einem Ineinandergreifen der beiden Konturen eine formschlüssig drehfeste Verbindung erhalten wird. Eine besonders einfach herstellbare und robuste Drehsicherung kann so ermöglicht werden.

In einer Ausführungsform umfasst die Verankerungseinrichtung eine schlitzartige Ausnehmung zum axial formschlüssigen Aufnehmen eines Verankerungsrings. Der Verankerungsring kann dadurch auf engstem Raum besonders einfach zum axial formschlüssigen Fixieren des Verankerungselements mit dem Speisenzubereitungsgefäß in die schlitzartige Ausnehmung gebracht werden, vorzugsweise durch eine Drehbewegung um die Drehachse, insbesondere bajonettartig. Bevorzugt ist die schlitzartige Ausnehmung in einem radialen Vorsprung der ersten nicht-rotationssymmetrischen Außenkontur des Verankerungselements eingebracht, so dass ein an die schlitzartige Ausnehmung angepasster Verankerungsring in die schlitzartige Ausnehmung der ersten nicht-rotationssymmetrischen Außenkontur des Verankerungselements gedreht werden kann. Mit anderen Worten ermöglicht die schlitzartige Ausnehmung, dass in dem Bereich oder der axialen Position der schlitzartigen Ausnehmung ein Verankerungsring trotz der sonst nicht nicht-rotationssymmetrischen Form der ersten Außenkontur des Verankerungselements dennoch relativ dazu gedreht werden kann, um in die schlitzartige Ausnehmung zu gelangen.

In eine Ausgestaltung hat der Verankerungsring eine nicht-rotationssymmetrische Innenkontur, die eine Spielpassung zur ersten nicht-rotationssymmetrischen Außenkontur des Verankerungselements aufweist. Zum Montieren des Verankerungsringes kann der Verankerungsring somit von unten über die erste nicht-rotationssymmetrische Außenkontur entlang des Verankerungselements bis zu der schlitzartigen Ausnehmung geschoben werden. In einer Ausgestaltung ist die mindestens eine schlitzartige Ausnehmung an die nicht-rotationssymmetrische Innenkontur des Verankerungsrings derart angepasst, dass der Verankerungsring relativ zur ersten nicht-rotationssymmetrischen Außenkontur des Verankerungselements in die schlitzartige Ausnehmung der ersten nicht-rotationssymmetrischen Außenkontur des Verankerungselements gedreht werden kann. Die schlitzartige Ausnehmung erstreckt sich in Umfangrichtung und/oder hat die Form eines Absatzes oder einer Nut. Bevorzugt befindet sich die mindestens eine schlitzartige Ausnehmung derart in einem Abstand zu einem Anschlag, dass sich beim Drehen des Verankerungsrings in die mindestens eine schlitzartige Ausnehmung der Verankerungsring so gegen die Wandung, insbesondere den Gefäßboden, gepresst wird, dass sich der Verankerungsring elastisch verformt. Eine Vorspannung und damit eine besonders feste axiale Fixierung können so erzielt werden.

In einer Ausführungsform wird eine Wandung, insbesondere ein die Durchführung umgebender Gefäßboden, zwischen einem Anschlag, insbesondere der Unterseite des Anschlags, und dem Verankerungsring fixiert, verspannt oder eingeklemmt, wenn der Verankerungsring in die mindestens eine schlitzartige Ausnehmung gebracht oder gedreht wurde. Das Verankerungselement kann so besonders zuverlässig axial fixiert mit dem Speisenzubereitungsgefäß verbunden werden. Insbesondere gehört der Anschlag zum Verankerungselement und/oder ist mit dem Verankerungselement einstückig verbunden. Vorzugsweise grenzt der Anschlag an die erste nicht-rotationssymmetrische Außenkontur des Verankerungselements an und/oder hat zumindest teilweise einen größeren Durchmesser als eine radiale Ausdehnung der ersten nicht-rotationssymmetrischen Außenkontur des Verankerungselements. Bevorzugt ist der Anschlag rotationssymmetrisch, vorzugsweise scheibenförmig.

In einer Ausführungsform ist der Verriegelungsmechanismus so eingerichtet, dass das Sperrelement durch Betätigen des Betätigungselements in eine Sperrstellung für das verriegelte Verbinden des Werkzeugs mit der Welle oder in eine Freigabestellung für das Lösen einer verriegelten Verbindung des Werkzeugs mit der Welle bewegt werden kann. Ein zuverlässiges Verriegeln und Lösen des Werkzeugs kann so erzielt werden.

In einer Ausführungsform ist ein mit dem Werkzeug verbundenes Werkzeuganschlusselement für das verriegelte Verbinden des Werkzeugs mit der Welle vorgesehen und/oder der Verriegelungsmechanismus ist so eingerichtet ist, dass das Sperrelement mit dem Werkzeuganschlusselement verrasten kann, insbesondere zum Erzeugen einer axial formschlüssig fixierten Verbindung. Das Werkzeug kann somit besonders zuverlässig und für den Benutzer komfortabel mittels des Werkzeuganschlusselements mit der Welle verriegelt verbunden werden. Insbesondere ist das Werkzeug axial gesichert und/oder drehbar mit dem Werkzeuganschlusselement verbunden.

In einer Ausführungsform weist das Werkzeuganschlusselement eine insbesondere hinterschnittene und/oder absatzförmige Rastkontur zum Verrasten mit dem Sperrelement in der Sperrstellung auf. Ein zuverlässiges Verriegeln kann so ermöglicht werden. In einer alternativen oder ergänzenden Ausführungsform ist die Rastkontur insbesondere in Umfangrichtung rampenförmig, bevorzugt mit einem Steigungswinkel von 5° bis 30°. Wenn das Sperrelement von der Freigabestellung in die Sperrstellung bewegt oder rotiert wird, gleitet das Sperrelement die rampenförmige Rastkontur in axialer Richtung hinauf. Dadurch erhöht sich der Anpressdruck des Sperrelements gegen die Rastkontur. Eine besonders zuverlässige Sicherung des Sperrelements in der Sperrstellung kann so erzielt werden. Bevorzugt befindet sich die Rastkontur im Inneren eines von dem Werkzeuganschlusselement bevorzugt glockenartig umschlossenen Raums.

In einer Ausführungsform ist ein Spannmittel, insbesondere Feder, vorgesehen und/oder der Verriegelungsmechanismus ist so eingerichtet, dass das Spannmittel das Sperrelement axial vorspannt, insbesondere gegen das Verankerungselement. Ein besonders zuverlässiges Sichern des Sperrelements in der Sperrstellung kann so ermöglicht werden. Insbesondere ist das Spannmittel an der Unterseite der ersten nicht-rotationssymmetrischen Außenkontur, die radial hervorsteht, angeordnet und drückt unmittelbar gegen die Oberseite des Betätigungselements. Bevorzugt ist eine Aufnahmevertiefung für das Spannmittel in dem Betätigungselement vorgesehen, die sich bevorzugt nicht nur axial, sondern auch in Umfangrichtung erstreckt, damit bei einer Rotation des Betätigungselements das Spannmittel nicht die Rotation relativ zum Verankerungselement blockiert. In einer Ausgestaltung befindet sich das Spannmittel in einer radialen Distanz zur Drehachse, die kleiner ist als der Radius der Durchgangsöffnung des Speisenzubereitungsgefäßes.

In einer Ausführungsform weist das Verankerungselement eine zweite nicht-rotationssymmetrische Außenkontur zum formschlüssig drehfesten Fixieren des Werkzeuganschlusselements auf und/oder das Werkzeuganschlusselement umfasst eine nicht-rotationssymmetrische Innenkontur, die so ausgebildet und/oder an die zweite nicht-rotationssymmetrischen Außenkontur angepasst ist, dass das Werkzeuganschlusselement auf die zweite nicht-rotationssymmetrische Außenkontur aufgesteckt werden kann. Eine besonders zuverlässige Drehfixierung zwischen dem Werkzeuganschlusselement und dem Verankerungselement und damit dem Speisenzubereitungsgefäß kann so erzielt werden. In einer Ausgestaltung liegt der Anschlag axial, insbesondere unmittelbar, zwischen der ersten nicht-rotationssymmetrischen Außenkontur und der zweiten nicht-rotationssymmetrischen Außenkontur und/oder hat einen größeren Durchmesser als die zweite Außenkontur.

In einer Ausführungsform ist der Verriegelungsmechanismus so eingerichtet, dass für ein Verriegeln der Verbindung des Werkzeugs mit der Welle das Betätigungselement so gedreht wird, dass sich das Sperrelement von der Freigabestellung in die Sperrstellung dreht und dabei durch die rampenförmige Rastkontur gleichzeitig gegen die Vorspannkraft des Spannmittels axial verschiebt, also relativ zum Verankerungselement verschiebt. Durch das axiale Verschieben wird ermöglicht, dass das Sperrelement in eine besonders große Überdeckung mit der hinterschnittenen Rastkontur in der Sperrstellung gebracht werden kann, weil das sonst im Wesentlichen unelastische Sperrelement, Verbindungsmittel, Betätigungselement und Verankerungselement nicht eine ausreichende elastische Verformbarkeit zum Hinaufgleiten der rampenförmigen Rastkontur bieten würden. Insbesondere wird die rampenförmige Rastkontur durch ein vorzugsweise dichtes Aufliegen der Unterseite des Werkzeuganschlusselements auf dem Verankerungselement, insbesondere der Oberseite des Anschlags, abgestützt. Die Vorspannkraft des Spannelements wird dadurch auf die Oberseite des Anschlags des Verankerungselements innerhalb des Speisenzubereitungsgefäßes und auf die Unterseite der ersten nicht-rotationssymmetrischen Außenkontur des Verankerungselements außerhalb des Speisenzubereitungsgefäßes übertragen. In einer Ausgestaltung wird die Vorspannkraft nicht auf das Speisenzubereitungsgefäß übertragen.

In einer Ausführungsform ist ein Betätigungshilfsmittel, insbesondere ein Fußteil des Speisenzubereitungsgefäßes, zum Betätigen des Betätigungselements vorgesehen und/oder der Verriegelungsmechanismus ist so eingerichtet, dass das Betätigungshilfsmittel zum Verriegeln der Verbindung des Werkzeugs mit der Welle relativ zum Speisenzubereitungsgefäß in eine Betriebsstellung gedreht werden kann und/oder zum Lösen der verriegelten Verbindung des Werkzeugs mit der Welle relativ zum Speisenzubereitungsgefäß aus der Betriebsstellung heraus gedreht werden kann. Ein besonders leichtgängiges manuelles Verriegeln und Lösen werden so für den Benutzer ermöglicht. Wenn das Betätigungshilfsmittel das Fußteil ist, kommt dem Fußteil zudem eine Doppelfunktion zu. Insbesondere ist das Fußteil in der Betriebsstellung axial fixiert mit dem Speisenzubereitungsgefäß verbunden und/oder nach dem Herausdrehen aus der Betriebsposition von dem Speisenzubereitungsgefäß gelöst. Allgemein kann das Speisenzubereitungsgefäß mittels des Fußteils auf einer Oberfläche abgestellt und/oder von einer Aufnahme der Speisenzubereitungsvorrichtung zum Betrieb aufgenommen werden.

In einer Ausgestaltung erfüllen die erste nicht-rotationssymmetrische Außenkontur des Verankerungselements, die zweite nicht-rotationssymmetrische Außenkontur des Verankerungselements, die nicht-rotationssymmetrische Außenkontur des Sperrelements, optional die nicht-rotationssymmetrische Außenkontur einer Wellenschnittstelle, sowie die nicht-rotationssymmetrische Innenkontur des Werkzeuganschlusselements, die nicht-rotationssymmetrische Innenkontur des Verankerungsringes, die nicht-rotationssymmetrische Innenkontur der Durchführung und/oder eine nicht-rotationssymmetrische Innenkontur des Betätigungshilfsmittels mindestens eines der nachfolgenden Merkmale. Gemäß einem ersten Merkmal ist die nicht-rotationssymmetrische Innenkontur bzw. Außenkontur sternartig und/oder weist mindestens zwei und/oder höchstens zehn radiale Ausnehmungen bzw. Vorsprünge auf. Gemäß einem zweiten Merkmal sind alle radialen Ausnehmungen bzw. Vorsprünge gleich geformt. Gemäß einem dritten Merkmal sind die radialen Ausnehmungen bzw. Vorsprünge gleichmäßig umlaufend verteilt angeordnet, so dass insbesondere eine bei mehreren Winkelpositionen auf sich selbst abbildbare Innenkontur bzw. Außenkontur erhalten wird. Gemäß einem vierten Merkmal sind die Innenkontur bzw. Außenkontur durchgehend ohne Kanten. Gemäß einem fünften Merkmal haben eine Innenkontur und eine Außenkontur korrespondierende Konturen, die ein manuelles Ineinanderschieben erlauben. Gemäß einem sechsten Merkmal haben alle genannten Innenkonturen und Außenkonturen denselben Konturverlauf, können jedoch eine unterschiedliche Skalierung aufweisen. Gemäß einem siebten Merkmal sind alle genannten Außenkonturen und/oder Innenkonturen deckungsgleich.

In einer Ausgestaltung sind das Verankerungselement, das Betätigungselement, das Verbindungsmittel, das Sperrelement und die Welle Bestandteile der Verankerungsbaugruppe. Die Anzahl der separaten Einheiten kann so reduziert werden. In einer Ausgestaltung sind das Werkzeuganschlusselement und das Werkzeug Bestandteile der Werkzeugbaugruppe. Der Benutzer braucht so weniger Teile zu handhaben.

Ein weiterer Aspekt der Offenbarung betrifft ein Verfahren, bei dem ein Fußteil relativ zu einem Speisenzubereitungsgefäß gedreht wird, um ein Werkzeug zum Zerkleinern und/oder Mischen von einer Welle zu lösen, die dicht verankert im Gefäßboden des Speisenzubereitungsgefäßes verbleiben kann. Ein hoher Benutzerkomfort wird so erzielt.

Ein weiterer Aspekt der Offenbarung betrifft ein Verfahren, bei dem durch ein Drehen eines Verankerungsringes ein Verankerungselement mit einem Speisenzubereitungsgefäß formschlüssig axial fixiert wird. Eine kompakte und bedienfreundliche Fixierung wird erzielt. Nachfolgend werden Ausführungsbeispiele der Erfindung auch anhand von Figuren näher erläutert, wobei die nachfolgenden Merkmale mit den beanspruchten Gegenständen kombiniert werden können. Die beanspruchten Schutzbereiche sind nicht auf die Ausführungsbeispiele beschränkt.

Es zeigen:
- Figur 1:: Explosionsdarstellung eines Teils einer Speisenzubereitungsvorrichtung;
- Figur 2:: Schematische Darstellung einer Werkzeugbaugruppe;
- Figur 3:: Schematische Darstellung der Freigabestellung des Sperrelements;
- Figur 4:: Schematische Darstellung der Sperrstellung des Sperrelements;
- Figur 5:: Querschnittsdarstellung durch die Verankerungsbaugruppe;
- Figur 6:: Längsschnittdarstellung durch das Speisenzubereitungsgefäß mit verriegelt verbundenem Werkzeug.

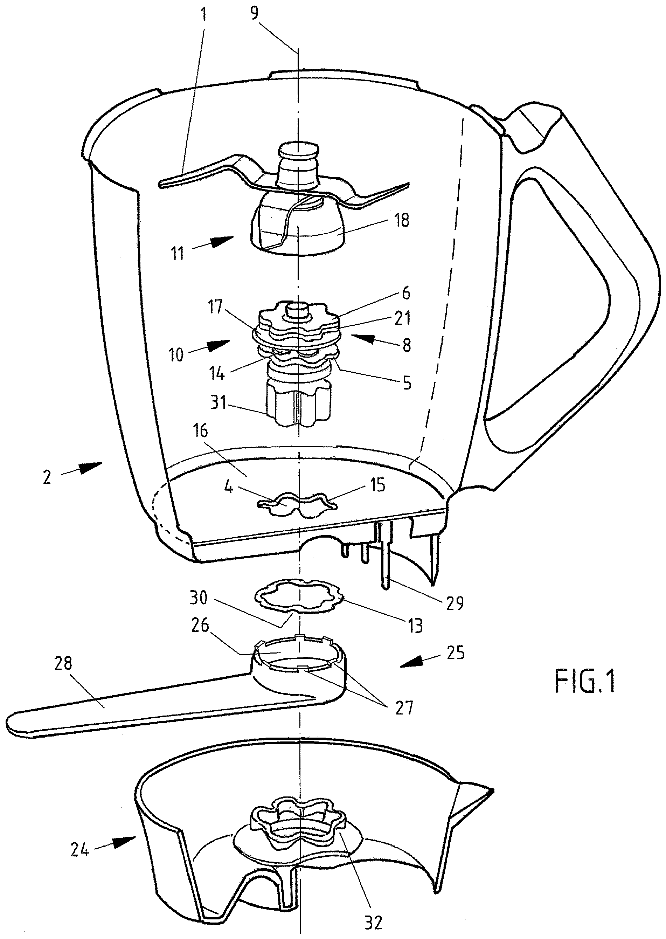

Die Figur 1 zeigt ein Speisenzubereitungsgefäß 2 und eine Werkzeugbaugruppe 11 mit einem Werkzeuganschlusselement 18 und einem um die Drehachse 9 drehbaren Werkzeug 1 zum Zerkleinerung und/oder Mischen einer Speise. Ferner gezeigt ist eine Verankerungsbaugruppe 10 zum dichten Verankern in der Durchführung 4 im Gefäßboden 16 und zum Übertragen eines Drehmoments auf das Werkzeug 1 von einem nicht dargestellten elektrischen Antrieb, der über eine Wellenschnittstelle 32 ankoppelbar ist. Die Verankerungsbaugruppe 10 umfasst ein Sperrelement 6 und ein Betätigungselement 5 sowie ein Verankerungselement 8, das axial zwischen dem Betätigungselement 5 und dem Sperrelement 6 eine erste nicht-rotationssymmetrische Außenkontur 14, einen insbesondere rotationssymmetrischen Anschlag 17 und eine zweite nicht-rotationssymmetrische Außenkontur 21 bevorzugt in genau dieser Reihenfolge aufweist. Ebenfalls gezeigt ist ein Verankerungsring 13, der mithilfe des separaten Drehschlüssels 25 zum axialen Fixieren der Verankerungsbaugruppe 10 mit dem Gefäßboden 16 im Randbereich der Durchführung 4 manuell gedreht werden kann. Die Drehung erfolgt relativ zu dem Verankerungselement 8, das mittels der ersten nicht-rotationssymmetrischen Außenkontur 14 drehfest in der nicht-rotationssymmetrischen Innenkontur 15 der Durchführung 4 fixiert ist. Ein als Gefäßfuß ausgestaltetes Betätigungshilfsmittel 24 kann vom Benutzer zum Betätigen eines Verriegelungsmechanismus zum Lösen und/oder insbesondere axialen Verriegeln der Werkzeugbaugruppe 11 mit der Verankerungsbaugruppe 10 genutzt werden. Eine nicht-rotationssymmetrische Innenkontur 32 des Betätigungshilfsmittels 24 sorgt für eine einfache und zuverlässige drehfeste Ankopplung von unten an das Betätigungselement 5.

Die Speisenzubereitungsvorrichtung ist bevorzugt ein Speisenzubereitungsgerät wie z.B. eine elektrische Küchenmaschine vorzugsweise mit einem Heizelement zum Erhitzen der Speise in dem Speisenzubereitungsgefäß. Im Betrieb werden eine Speise und/oder eine Zutat in das Speisenzubereitungsgefäß 2 gegeben und dort durch Mischen, Zerkleinern und/oder Erhitzen zubereitet. Eine Speise kann fest oder flüssig sein. Zur Versorgung einer elektrischen Komponente des Speisenzubereitungsgefäßes 2 wie z.B. dem Heizelement mit elektrischer Energie, sind Steckkontakte 29 vorgesehen.

In einer Ausgestaltung weist der Drehschlüssel 25 eine offene Zylinderform mit einer Öffnung 26 auf, die axial über das Betätigungselement 5 und/oder die erste Außenkontur 14 gesteckt werden kann, um den Verankerungsring 13 auch bei axial fixierter Verankerungsbaugruppe 10 mittels Drehung lösen zu können. Bevorzugt hat der Drehschlüssel 25 einen radialen, hebelartigen Griff 28 für den Benutzer. Vorzugsweise sind an der Zylinderform ein Magnet zum Halten des Verankerungsrings 13 und/oder axiale Nasen 27 vorgesehen, die in entsprechend geformte Einkerbungen 30 an der Außenkontur des Verankerungsrings 13 durch ein axiales Ansetzen drehfest in Eingriff gebracht werden können.

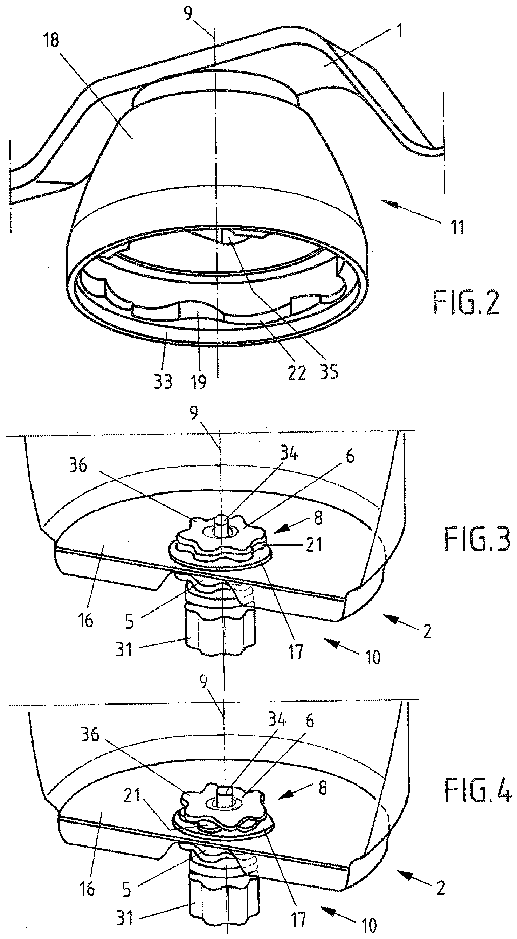

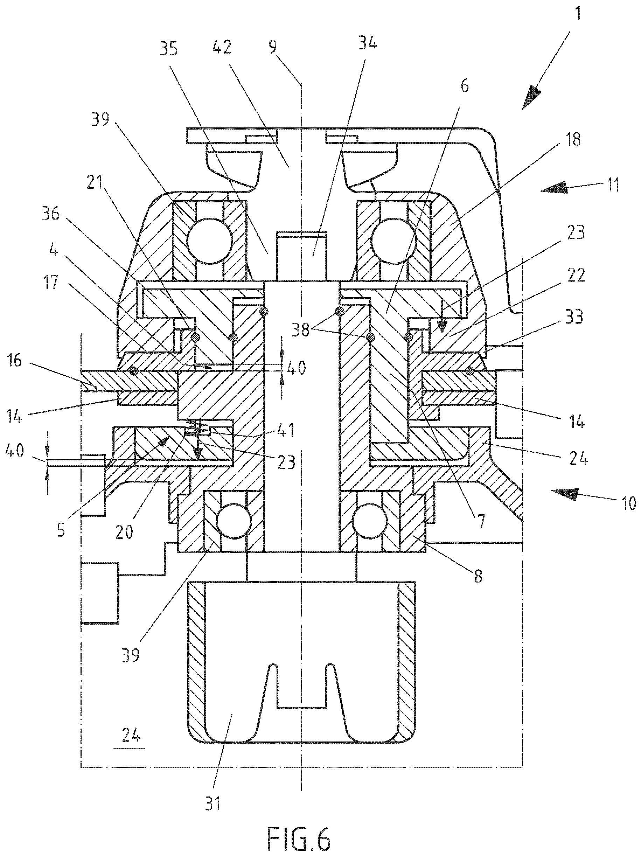

Die Figur 2 zeigt die Werkzeugbaugruppe 11 mit dem Werkzeug 1 und dem glockenartig oder becherförmig geformten Werkzeuganschlusselement 18. An der gegenüberliegenden Seite vom Werkzeug 1 weist das Werkzeuganschlusselement 18 einen bevorzugt rotationssymmetrischen Rand 33 insbesondere mit einer Fase von ungefähr 45° auf. Der Rand 33 bildet einen Eingang zum Inneren des von dem Werkzeuganschlusselement 18 umschlossenen Raums. Dieser axiale Eingang wird durch die nicht-rotationssymmetrische Innenkontur 22 vom Umfang her in Richtung der Drehachse begrenzt und teilweise verengt. Die nach innen zur Drehachse 9 ragenden Vorsprünge der nicht-rotationssymmetrischen Innenkontur 22 bilden gleichzeitig die Rastkonturen 19 für das Sperrelement 6. Die Rastkonturen 19 verengen also den Eingang. Die Rastkonturen 19 erstrecken sich in Umlaufrichtung rampenförmig, d.h., die axiale Ausdehnung wird in Umlaufrichtung größer. An die nicht-rotationssymmetrische Innenkontur 22 und damit die Rastkonturen 19 grenzt ein Hinterschnitt an. Am geschlossenen oder oberen Ende des umschlossenen Raumes befindet sich die nicht-rotationssymmetrische Anschlusskontur 35 zur drehfesten Ankopplung des Werkzeugs 1. Die nicht-rotationssymmetrische Anschlusskontur 35 kann Bestandteil der in der Figur 6 gezeigten Ankopplungswelle 42 sein, die mit dem Werkzeug 1 vorzugsweise unlösbar verbunden ist.

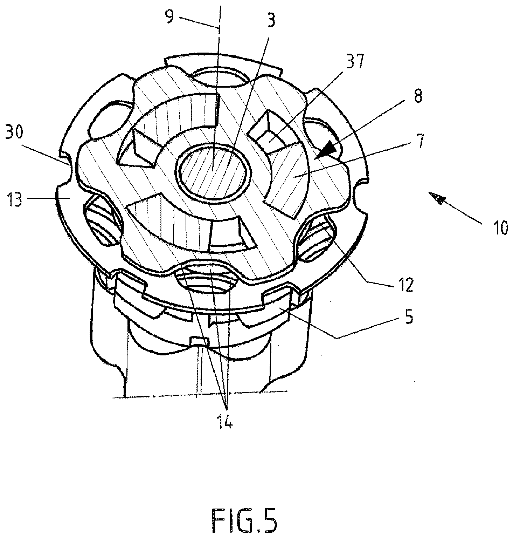

Die Figuren 3 und 4 zeigen die Verankerungsbaugruppe 10 in einem mit dem Speisenzubereitungsgefäß 2 verankerten Zustand. Wenn sich das Sperrelement 6 wie in Figur 3 gezeigt in der Freigabestellung befindet und die Anschlusskonturen 34, 35 passend zueinander ausgerichtet sind, kann die Werkzeugbaugruppe 11 auf die Verankerungsbaugruppe 10 aufgesteckt werden, bis der Rand 33 auf dem bevorzugt rotationssymmetrischen Anschlag 17 insbesondere bündig oder fluchtend aufsetzt. Das Werkzeuganschlusselement 18 umschließt dann den oberhalb von dem Anschlag 17 befindlichen Teil der Verankerungsbaugruppe 10, also die zweite Außenkontur 21 und das Sperrelement 6. Wenn der Rand 33 auf dem Anschlag 17 aufliegt, greifen gleichzeitig die nicht-rotationssymmetrischen und zueinander korrespondierenden Anschlusskonturen 34, 35 des Werkzeugs 1 und der Welle 3, die in den Figuren 5 und 6 gezeigt ist, ineinander, um eine formschlüssig drehfeste Verbindung zur Übertragung eines Antriebsmoments des Antriebs herzustellen, insbesondere durch eine Zwei-Kant-Verbindung. Wenn der Rand 33 auf dem Anschlag 17 aufliegt, greift gleichzeitig auch die nicht-rotationssymmetrische Innenkontur 22 in die nicht-rotationssymmetrische Außenkontur 14 des Verankerungselements 8, um das Werkzeuganschlusselement 18 drehfest mit dem Verankerungselement 8 zu verbinden. In der Freigabestellung ist das Sperrelement 6 so ausgerichtet ist, dass die nicht-rotationssymmetrische Innenkontur 22 über das Sperrelement 6 und dann weiter ebenfalls ungehindert über die zweite nicht-rotationssymmetrische Außenkontur 21 bis zum Anschlag 17 gesteckt werden kann. Bevorzugt überdeckt das Sperrelement 6 die zweite Außenkontur 21 vollständig oder fluchtet umfänglich damit.

Die Figur 4 zeigt das Sperrelement 6 in der Sperrstellung, in der das Sperrelement 6 relativ zur zweiten nicht-rotationssymmetrischen Außenkontur 21 um die Drehachse 9 gedreht ist. Das Sperrelement 6 fluchtet in der Sperrstellung nicht mehr mit der zweiten Außenkontur 21 und überdeckt die zweite Außenkontur 21 auch nicht mehr vollständig. Wenn in der Sperrstellung versucht wird, die Werkzeugbaugruppe 11 auf die Verankerungsbaugruppe 10 aufzustecken, schlägt der Rand 33 vorzeitig auf die Oberseite der zweiten Außenkontur 21 auf und kann somit nicht zum Anschlag 17 gelangen. Eine Fehlbenutzung kann so vermieden werden.

Wenn das Werkzeuganschlusselement 18 planmäßig auf die Verankerungsbaugruppe 10 bis zum Anschlag 17 aufgesteckt ist, kann durch manuelles Drehen des in der Figur 1 gezeigten Betätigungshilfsmittels 24 das Betätigungselement 5 und damit das Sperrelement 6 in die Sperrstellung gedreht werden und zwar relativ zur drehfixierten zweiten nicht-rotationssymmetrischen Außenkontur 21. Die radialen Vorsprünge 36 der nicht-rotationssymmetrischen Außenkontur des Sperrelements 6 werden dadurch in Umfangrichtung auf die rampenförmigen Rastkonturen 19 geschoben und dort verkeilt oder vorgespannt gesichert. Durch Drehen in die entgegengesetzte Richtung in die Freigabestellung kann die Verriegelung wieder gelöst werden.

Die Figur 5 zeigt eine Querschnittsdarstellung durch die Verankerungsbaugruppe 10 ungefähr auf Höhe der Oberfläche des Gefäßbodens 16. Die genau drei Verbindungsmittel 7, welche das Betätigungselement 5 mit dem Sperrelement 6 U-förmig zur axialen und rotatorischen Kopplung verbinden, werden jeweils durch eine dafür vorgesehene Verbindungsausnehmung 37 axial durch das Verbindungselement 8 geführt. In einer Ausführungsform hat das Verbindungsmittel 7 die Querschnittsform eines Ringsegments, um besonders zuverlässig in einer ebenfalls ringsegmentförmigen Verbindungsausnehmung 37, die sich verglichen mit dem Verbindungmittel über einen größeren Winkelbereich erstreckt, in Umfangrichtung verschoben werden zu können, damit das Sperrelement zwischen der Freigabestellung und der Sperrstellung hin und her gedreht werden kann. Der Verankerungsring 13 ist in Figur 4 in die schlitzartigen Ausnehmungen 12 gedreht, bevorzugt durch den in Figur 1 gezeigten Drehschlüssel 25, der in die Einkerbungen 30 eingreift. Die Welle 3 verläuft durch eine mittige Bohrung in dem Verankerungselement 8.

Die Figur 6 zeigt einen Längsschnitt durch das Speisenzubereitungsgefäß mit verriegelt verbundenem Werkzeug. Mindestens ein Dichtelement 38 wie z.B. ein Dichtring ist zwischen der Unterseite des Anschlags 17 und der Oberseite des Gefäßbodens 16, zwischen dem Verbindungsmittel 7 und mindestens einer der beiden radialen Innenwände der Verbindungsausnehmung 37, und/oder zwischen der Welle 3 und der angrenzenden Bohrungswand in dem Verankerungselement 8 vorzugsweise am oberen Ende der Bohrung angeordnet, um das Speisenzubereitungsgefäß 2 nach unten hin abzudichten, so dass auch flüssige Speise nicht am Gefäßboden 16 durch die Durchführung 4 und die darin verankerten Verankerungsbaugruppe 10 austreten kann. In Figur 6 sind die Kugellager 39 gezeigt, welche das Werkzeug 1 mit dem Werkzeuganschlusselement 18 und die Welle 3 mit dem Verankerungselement 8 drehbar und axial fixiert verbinden. Ebenfalls ist gezeigt, dass das Werkzeug 1 zweiteilig ausgeführt sein kann und an der Unterseite eine Ankopplungswelle 42 aufweisen kann, die dann die nicht-rotationssymmetrische Anschlusskontur 34 des Werkzeugs aufweist und durch ein Kugellager 39 drehbar im Werkzeuganschlusselement 18 gelagert ist.

Mindestens ein Spannmittel 20, insbesondere Feder, ist axial zwischen der Unterseite der ersten Außenkontur 14 und der Oberseite des Betätigungselements 5 angeordnet und vorgespannt. Insbesondere sind mindestens zwei und/oder höchstens sechs, bevorzugt drei Spannmittel 20 bevorzugt jeweils in einer Aufnahmevertiefung 41 in dem Betätigungselement 5 aufgenommen, die sich bevorzugt nicht nur axial, sondern auch insbesondere kreissegmentförmig in Umfangrichtung erstreckt, damit das Spannmittel 20 nicht die Rotation des Betätigungselements 5 für ein Drehen des Sperrelements 6 zwischen der Sperrstellung und der Freigabestellung relativ zum Verankerungselement 8 blockiert.

Die Vorspannkraft 23 des Spannmittels 20 wird durch das Verbindungsmittel 7 auf das Sperrelement 6 übertragen und vermag so das Sperrelement 6 in der Sperrstellung gegen die Rastkontur 19 zu verspannen. Ferner wird das Spannmittel 20 beim Drehen des Sperrelements 6 von der Freigabestellung in die Sperrstellung durch die rampenförmige Rastkontur 19 axial ausgelenkt. Die Auslenkung entspricht dem Hubweg 40 durch das Aufschieben des Vorsprungs 36 des Sperrelements 6 auf die rampenförmige Rastkontur 19. Die U-Form, die durch das Betätigungselement 5, das Verbindungsmittel 7 und das Sperrelement 6 gebildet wird, sorgt für eine zuverlässige Übertragung der axialen Verschiebung über den Hubweg 40 entgegen der Vorspannkraft 23 des Spannmittels 20.

Hat der Benutzer die Werkzeugbaugruppe 11 auf die Verankerungsbaugruppe 10 mit dem sich in der Freigabestellung befindlichen Sperrelement 6 planmäßig bis zum Anschlag 17 aufgesteckt, setzt das Werkzeug 1 auf die Welle 3 auf und die nicht-rotationssymmetrischen Anschlusskonturen 34, 35 greifen ineinander. Eine axiale Verriegelung dieser Verbindung des Werkzeugs 1 mit der Welle 3 liegt dann jedoch noch nicht vor, so dass sich die Werkzeugbaugruppe 11 von der Verankerungsbaugruppe 10 lösen würde, wenn die Welle in diesem Zustand angetrieben würde. Um dies zu vermeiden, ist in einer Ausgestaltung die Speisenzubereitungsvorrichtung so eingerichtet, dass das Speisenzubereitungsgefäß 2 dann in eine nicht dargestellte Aufnahme der Speisenzubereitungsvorrichtung zum Betrieb aufgenommen und die Wellenschnittstelle 31 an den Antrieb angekoppelt werden kann, wenn das Betätigungshilfsmittel 24 in einer Drehstellung mit dem Speisenzubereitungsgefäß 2 verbunden ist, durch die sichergestellt ist, dass sich das Sperrelement 6 in der Sperrstellung befindet.

Das verriegelte Verbinden des Werkzeugs 1 mit der Welle 3 kann somit sicher und bequem durch das axiale Verriegeln der Werkzeugbaugruppe 11 mit der Verankerungsbaugruppe ermöglicht werden.

## Patentansprüche

1. Verankerungsbaugruppe (10) für eine Speisenzubereitungsvorrichtung zum Verankern in einem Speisenzubereitungsgefäß (2) der Speisenzubereitungsvorrichtung derart, dass sich eine Welle (3) der Verankerungsbaugruppe (10) von außerhalb des Speisenzubereitungsgefäßes (2) durch eine Durchführung (4) erstrecken kann, die ins innere des Speisenzubereitungsgefäßes (2) führt, um ein Werkzeug (1) innerhalb des Speisenzubereitungsgefäßes (2) für ein Mischen und/oder Zerkleinern einer Speise antreiben zu können, **dadurch gekennzeichnet, dass** die Verankerungsbaugruppe (10) die Welle (3), ein Betätigungselement (5), ein Verankerungselement (8) und ein Sperrelement (6) umfasst und das Verankerungselement (8) eine Verankerungseinrichtung (12, 14) für das Verankern des Verankerungselements (8) mit einem Speisenzubereitungsgefäß (2) aufweist, die in Richtung einer Drehachse (9) der Welle (3) zwischen dem Betätigungselement (5) und dem Sperrelement (6) angeordnet ist, wobei das Betätigungselement (5) und das Sperrelement (6) so miteinander gekoppelt sind, dass sie sich gemeinsam relativ zum Verankerungselement (8) bewegen können.

## Claims

1. Anchoring assembly (10) for a food preparation appliance for anchoring in a food preparation container (2) of the food preparation appliance in such a way that a shaft (3) of the anchoring assembly (10) can extend from outside the food preparation container (2) through a passage (4) that leads into the inside of the food preparation container (2) in order to be able to drive a tool (1) inside the food preparation container (2) for a mixing and/or chopping of a food, **characterized in that** the anchoring assembly (10) comprises the shaft (3), an actuating element (5), an anchoring element (8) and a locking element (6) and the anchoring element (8) comprises an anchoring device (12, 14) for anchoring the anchoring element (8) to a food preparation container (2), the anchoring device (12, 14) being arranged between the actuating element (5) and the locking element (6) in a direction of an axis of rotation (9) of the shaft (3), wherein the actuating element (5) and the locking element (6) are coupled to each other such that they are able to move together relative to the anchoring element (8).

## Revendications

1. Module d'ancrage (10) pour un dispositif de préparation d'aliments pour être ancré dans un récipient de préparation d'aliments (2) du dispositif de préparation d'aliments, de sorte qu'un premier arbre (3) du module d'ancrage (10) peut s'étendre de l'extérieur du récipient de préparation d'aliments (2) à travers un passage (4), qui s'étend jusqu'à l'intérieur du récipient de préparation d'aliments (2), pour pouvoir entraîner un outil (1) à l'intérieur du récipient de préparation d'aliments (2) pour mélanger et/ou broyer un aliment, **caractérisé en ce que** le module d'ancrage (10) comprend l'arbre (3), un élément d'actionnement (5), un élément d'ancrage (8) et un élément de blocage (6), et que l'élément d'ancrage (8) comprend un dispositif d'ancrage (12, 14) pour l'ancrage de l'élément d'ancrage (8) dans un récipient de préparation d'aliments (2), lequel dispositif d'ancrage (12, 14) est disposé dans la direction d'un axe de rotation (9) de l'arbre (3) entre l'élément d'actionnement (5) et l'élément de blocage (6), l'élément d'actionnement (5) et l'élément de blocage étant couplés l'un à l'autre, de sorte qu'ils peuvent se déplacer ensemble par rapport à l'élément d'ancrage (8).
